# EUROPEAN PATENT SPECIFICATION

(11) **EP 3 496 219 B1**
(45) Date of publication and mention of the grant of the patent: **20.10.2021**
(21) Application number: 17205887.7
(22) Date of filing: 07.12.2017
(51) Int. Cl.: H02G 3/08, H02G 3/12, H02G 3/06

(54) **CONNECTION CASING**
ANSCHLUSSGEHÄUSE
BOÎTIER DE CONNEXION

(43) Date of publication of application: 12.06.2019
(73) Proprietor: ABB Schweiz AG, 5400 Baden (CH)
(72) Inventor: Andersson, Johan, 06100 Porvoo (FI); Luomi, Juho, 06100 Porvoo (FI); Kotilainen, Petri, 06100 Porvoo (FI)
(74) Representative: Kolster Oy Ab

(56) References cited:
- EP-A1- 1 489 713
- EP-A1- 2 822 119
- EP-A1- 3 059 817
- EP-A1- 3 059 821
- DE-A1-102004 001 069
- DE-U1-202010 014 721
- FR-A- 1 307 295
- US-A- 4 424 406

## Description

### FIELD OF THE INVENTION

The present invention relates to a connection casing.

### BACKGROUND ART

The connection casing could be formed of a mounting box or of a connection sleeve.

Mounting boxes may be divided into two basic types.

The first type of mounting box is attached to the wall construction before the inner wall is erected, whereby also the cables and/or the tubes with electric wires are connected to the mounting box before the inner wall is erected. The inner wall is then erected, whereby an opening is formed in the inner wall for an adjustment collar of the mounting box. The adjustment collar will protrude through the opening in the inner wall so that the planar outer surface of the adjustment collar is flush with the inner surface of the inner wall. Access to the mounting space provided within the mounting box is thus provided through the adjustment collar.

The second type of mounting box is attached to the wall construction after the inner wall has been erected. An opening is formed in the inner wall, the cables and/or tubes are connected to the mounting box through the opening, and the mounting box is then pushed through the opening until the flanges of the mounting box seat against the inner wall. Fastening means will then secure the mounting box to the wall construction.

Both types of mounting boxes are provided with cable and/or tube lead-ins in a bottom portion of the mounting box. The cable lead-ins must be provided with strain relief preventing the cable from accidently slipping out of the cable lead-in when a dragging force is acting on the cable. The tube lead-ins need not be provided with strain relief. The tube lead-ins may be formed as a simple opening in the mounting box when flexible corrugated tubes are used. The valleys in the corrugation will seat into the edges of the opening forming a sort of a locking for the tube. Each lead-in must thus be formed either as a cable lead-in with strain relief or as a tube lead-in without strain relief.

A connection sleeve may be used to connect two tubes or to lead a cable into a tube. One end of the connection sleeve may in the latter case comprise a lead in provided with strain relief. A tube is connected to the other opposite end of the connection sleeve. The cable may thus be pushed through the lead in and further through the tube connected to the other end of the connection sleeve.

DE 10 2004 001 069 discloses plastic box for hollow wall electrical installations. The box comprises a cover, a front opening, a base with prepared regions for cable guiding. Each cable guiding comprises a cap and at least one ring tapering outwards in one piece and defining cutting surfaces guiding a cutting tool and freeing a hole by separation along the cutting surfaces.

EP 1 489 713 discloses a wall penetration device for cables or conduits, in particular for flexible electric cables. The device is designed to be mounted in a sealed manner in a circular opening of the wall. The wall may be an envelope of an electrical equipment, such as a cabinet, or a junction box or a branch. The device consists of a circular plug provided with an annular clamping groove on the outer perimeter of the plug. The edge of the opening in the wall will be seated in the groove so that the plug becomes attached to the opening. A planar surface in the plug is provided with sealing ribs acting on the outer wall face for sealing the plug to the wall. The interior of the plug comprises a passageway for a cable. Lips protrude into the passageway in order to be pressed elastically against cables of different diameters. The lips are of a generally frustoconical shape and form part of concentric breakable slices.

EP 2 822 119 discloses a mounting box. The mounting box comprises a box case having at least one installation aperture and attachment means comprising at least one attachment member for each of the at least one installation aperture. Each attachment member has an access surface and a stopping surface. The attachment means is adapted to allow movement of an elongated electric installation member through an installation aperture towards the mounting space and to resist reverse movement of the elongated electric installation member. Each attachment member is an integral part of the box case such that the box case and each attachment member are made from the same material.

### BRIEF DESCRIPTION OF THE INVENTION

An object of the present invention is to achieve a connection casing that can easily be adapted according to different installation requirements.

The connection casing according to the invention is defined in claim 1.

A connection casing provided with combined lead-ins that can be used as cable lead-ins with strain relief and as tube lead-ins without strain relief makes the connection casing more universal. The amount of cable lead-ins and tube lead-ins in the connection casing can be decided case by case when the connection casing is to be installed. The technician can easily during the installation of the connection casing cut off lead-in elements from the connection casing with a knife in order to turn a cable lead-in provided with strain relief into a tube lead-in without strain relief if this is needed.

The cutting off of the lead-in element may be done with a knife along a planar surface in the connection casing, whereby a clean and precise cut is achieved. The opening thus formed in the connection casing will be adapted to the dimensions of the corrugated tube to be used. The cross section of the opening may e.g. be round or oval corresponding to the cross section of the tube. Round and oval are normally used shapes in the tubes. The cross section of the tube and thereby also the cross section of the opening may have any form e.g. round, oval, rectangular, polygonal, trapeze like etc.

### BRIEF DESCRIPTION OF THE DRAWINGS

In the following the invention will be described in greater detail by means of preferred embodiments with reference to the attached drawings, in which:
Figure 1 shows a bottom part of a mounting box according to the invention,
Figure 2 shows a top part of the mounting box,
Figure 3 shows a first view of the mounting box,
Figure 4 shows a second view of the mounting box,
Figure 5 shows a cross section of the mounting box,
Figure 6 shows the mounting box in a state in which a cable lead-in element has been cut off,
Figure 7 shows an enlargement of the cable lead-in element,
Figure 8 shows a cross section of the cable lead-in element,
Figure 9 shows a first view of the mounting box with a cable connected to the mounting box,
Figure 10 shows a second view of the mounting box with a cable connected to the mounting box,
Figure 11 shows a first view of the mounting box with a tube connected to the mounting box,
Figure 12 shows a second view of the mounting box with a tube connected to the mounting box,
Figure 13 shows two mounting boxes mounted to a wall,
Figure 14 shows a connection sleeve according to the invention.

### DETAILED DESCRIPTION OF THE INVENTION

A mounting box 400 according to the invention may be formed of a bottom part 10 and a top part 20. The bottom part 10 may be mounted into the top part 20 so that the bottom part 10 and the top part 20 may be adjusted in relation to each other. The mounting box 400 forms a connection casing.

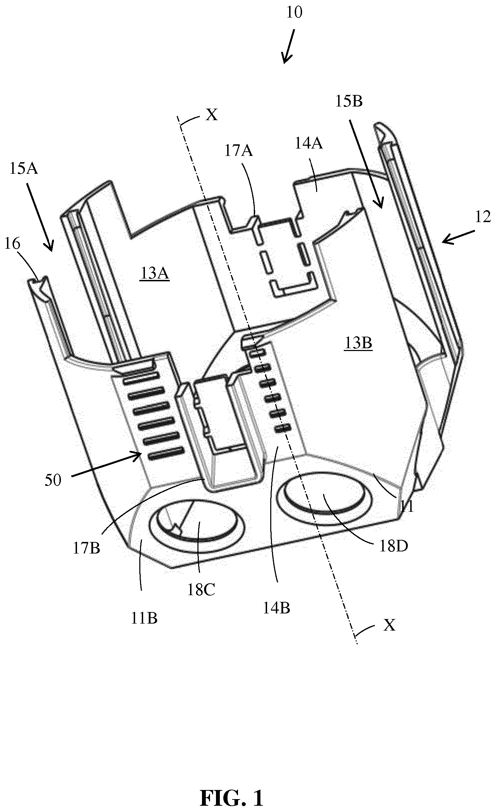

Figure 1 shows a bottom part of a mounting box according to the invention.

The bottom part 10 may comprise a bottom portion 11 and a connection portion 12. The bottom part 10 may further comprise a longitudinal centre axis X-X.

The bottom portion 11 of the bottom part 10 may comprise at least one planar surface section 11B being provided with at least one cable and/or tube lead-in 18C, 18D. Cables and/or tubes may be pushed through these lead-ins 18C, 18D. The lead-ins 18C, 18D provide a passage for electric wires positioned in tubes or in cables to pass into an interior of the mounting box 400 from an exterior of the mounting box 400. The lead-ins 18C, 18D may be closed with shield covers and opened during installation of the mounting box 400 by punching out the shield covers from the lead-ins 18C, 18D. The shield covers may be formed e.g. so that the material thickness is reduced on the outer perimeter of the lead-ins 18C, 18D or so that the outer perimeter is formed of a slot, whereby small radial supports extend cross the slot and keep the shield covers in place in the lead-ins 18C, 18D. The lead-ins 18C, 18D may on the other hand be formed of crosswise running slots forming radially inwardly from the outer perimeter of the lead-in extending tongues. The tongues may terminate at a distance from the middle of the lead-in 18C, 18D. A cable may be pushed through the lead-in 18C, 18D whereby the tongues bend inwards and let the cable pass through. The tongues will on the other hand prevent withdrawal of the cable from the lead-in 18C, 18D once it has been pushed through. The tongues form thus a strain relief for the cable. The planar surface section 11B may be perpendicular or inclined in relation to the longitudinal centre axis X-X of the mounting box 400.

The connection portion 12 of the bottom part 10 may extend axially X-X outwards from a perimeter of the bottom portion 11 of the bottom part 10. The connection portion 12 may be formed of two diametrically opposite first connection sections 13A, 13B and two diametrically opposite second connection portions 14A, 14B positioned between the first connection sections 13A, 13B. The axial X-X length of the first connection sections 13A, 13B may be greater than the axial length of the second connection sections 14A, 14B. The first connection sections 13A, 13B and the second connection sections 14A, 14B form a substantially annular connection portion 12 of the bottom part 10.

Each of the first connection sections 13A, 13B may comprise a first slot 15A, 15B. The first slot 15A, 15B may have a substantially rectangular shape. Each of the first slots 15A, 15B may extend axially X-X from an outer edge of the first connection section 13A, 13B towards the bottom portion 11. Both axial X-X edges of each of the first slots 15A, 15B may be provided with axial X-X grooves 16. The first slots 15A, 15B may be positioned on the middle of the perimeter of the first connection sections 13A, 13B.

Each of the second connection sections 14A, 14B may be provided with axially X-X extending U-shaped guide members 17A, 17B. A portion of the guide members 17A, 17B may protrude radially outwards from the perimeter of the second connection sections 14A, 14B.

The perimeter of each of the first connection sections 13A, 13B may be formed of a curved line.

The perimeter of each of the second connection sections 14A, 14B may be formed by a straight line.

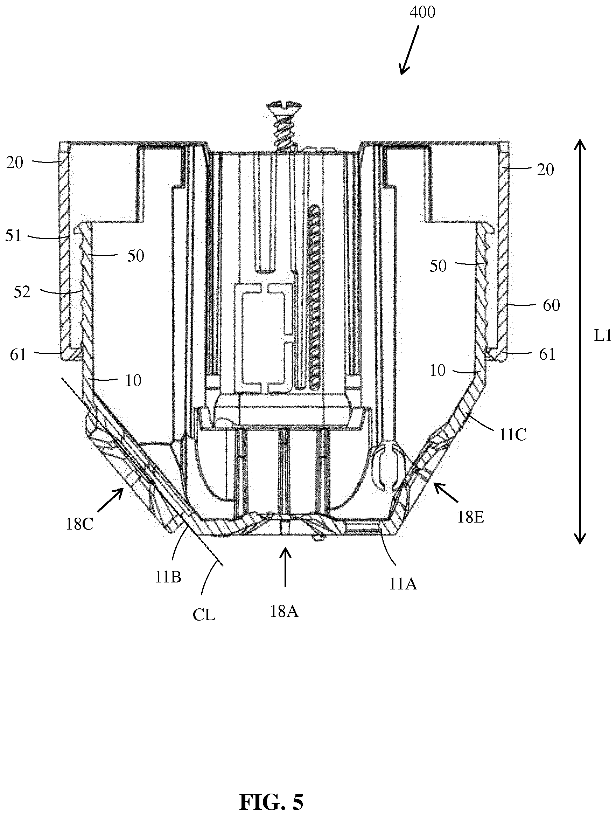

The second connection sections 14A, 14B may further comprise first connection means 50, which will be described more in detail in connection with figure 5.

The perimeter of the cross section of the connection portion 12 of the bottom part 10 may be curved at the first connection sections 13A, 13B, straight at the second connection sections 14A, 14B and broken at the first slots 15A, 15B.

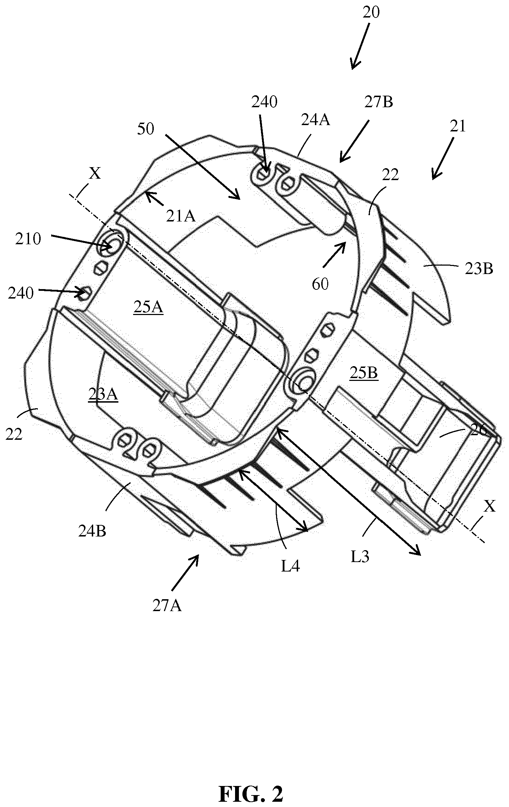

Figure 2 shows a top part of the mounting box.

The top part 20 may have a longitudinal centre axis X-X and may be composed of a body portion 21. The body portion 21 may have a closed outer perimeter. The body portion 21 may have an annular form. The body portion 21 may have a first end 21A forming an outer end of the mounting box 400. The first end 21A may be provided with radially outwardly from the first end 21A of the body portion 21 extending flange means 22. The flange means 22 may comprise four radially outwardly extending flange members 22 distributed at an equal angular distance from each other along the perimeter of the body portion 21 of the top part 20. The flange members 22 may define a flange plane. The first end 21A of the body portion 21 of the top part 20 forms a planar surface.

The body portion 21 of the top part 20 may be formed of two diametrically opposite first support sections 23A, 23B and two diametrically opposite second support sections 24A, 24B positioned between the first support portions 23A, 23B. The axial X-X length of the first support sections 23A, 23B may be greater than the axial length of the second support sections 24A, 24B. The first support sections 23A, 23B and the second support sections 24A, 24B form a substantially annular body portion 21 of the top part 20.

Each of the second support sections 23A, 23B may comprise a screw tower 25A, 25B extending axially X-X inwardly from the top end 21A of the body portion 21. Each opposite axial X-X edge of the screw tower 25A, 25B may be provided with an axial guide protrusion 26. The guide protrusions 26 may be received by the corresponding axial X-X grooves 16 in the first slots 15A, 15B in the bottom part 10 of the mounting box 400. Each of the screw towers 25A, 25B may have a substantially rectangular form. The screw towers 25A, 25B may be positioned in the centre of the perimeter of the first support sections 23A, 23B. The screw towers 25A, 25B may protrude inwards from the outer perimeter of the first support sections 23A, 23B.

An upper end of each of the screw towers 25A, 25B may be flush with a flange surface formed by the flange members 22 and may comprise an opening 210 for a fastening screw extending to the lower portion of the screw tower 25A, 25B and recesses 240 for fastening screws of the equipment that is to be accommodated in the mounting box 400. Each of the screw towers 25A, 25B may have an axial X-X length L3, which may be greater than the axial X-X length L4 of the first support sections 23A, 23B.

The perimeter of each of the first support sections 23A, 23B may be formed of a curved line.

The perimeter of each of the second support sections 24A, 24B may be formed by a straight line.

There may further be additional fastening means in the form of bushings with recesses 240 on the inner perimeter of the second support sections 24A, 24B. These form alternative fastening points for the fastening screws of the equipment that is to be accommodated in the mounting box 400. Each of the second support sections 24A, 24B may comprise second slots 27A, 27B extending axially X-X upwards from the lower edge of the second support sections 24A, 24B. The second slots 27A, 27B in the top part 20 may receive the guide members 17A, 17B in the bottom part 10.

Each of the second support sections 24A, 24B may further comprise second connection means 60, which will be described more in detail in connection with figure 5. The second connections means 60 in the top part 20 may cooperate with the first connection means 50 in the bottom part 10.

The top part 20 may be enclosed by a circle. The perimeter of the top part 20 may have curved portions at the first support sections 23A, 23B and straight portions at the second support sections 24A, 24B. The middle portion of each second support section 24A, 24B accommodating the screw towers 25A, 25B may be straight. The straight second support sections 24A, 24B make it possible to connect several mounting boxes 400 together from any of these straight portions.

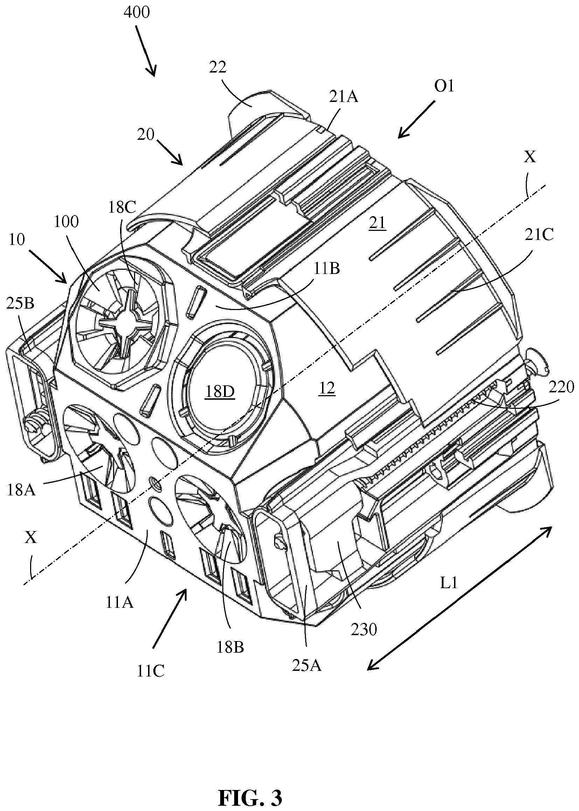

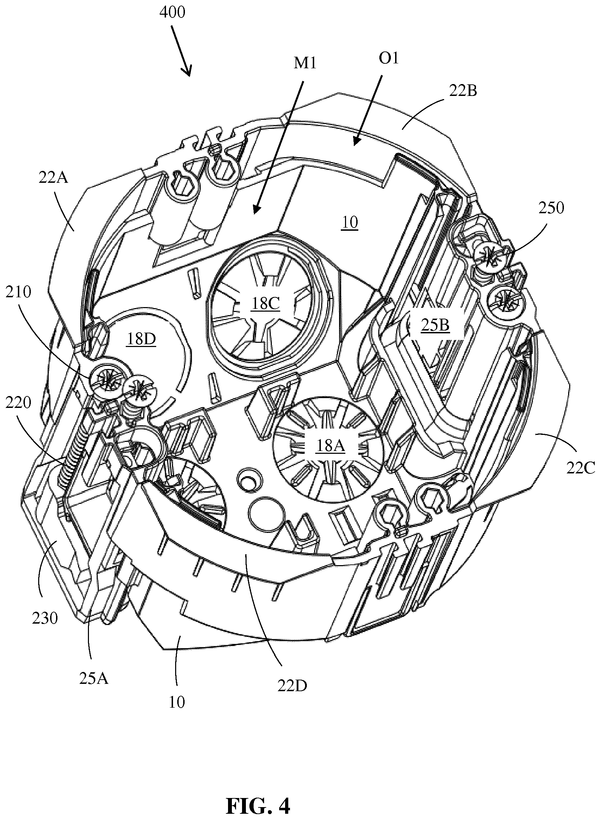

Figure 3 shows a first view of the mounting box and figure 4 shows a second view of the mounting box.

The mounting box 400 has a longitudinal centre axis X-X coinciding with the longitudinal centre axes X-X of the bottom part 10 and with the longitudinal centre axis X-X of the top part 20 of the mounting box 400. The position of the bottom part 10 and the top part 20 in relation to each other is adjustable along the longitudinal centre axis X-X. The figure shows a situation in which the bottom part 10 is fully pushed into the top part 20. The length L1 of the mounting box 400 is at a minimum in this situation. The connection space in the interior of the mounting box 400 is at a minimum when the bottom part 10 is fully pushed into the top part 20. The mounting box 400 comprises thus a body 10, 20 with a substantially closed outer perimeter, an open O1 top end 21A and a substantially closed bottom 10, a connection space M1 being formed within the mounting box 400. The body 10, 20 of the mounting box 400 may have a substantially tubular or a substantially annular form. A transverse cross section of the body 10, 20 of the mounting box 400 may be substantially round or substantially annular or substantially polygonal or any combination of two or more of these. There may further be substantially straight portions and/or curved portions in the transverse cross section of the body 10, 20 of the mounting box 400.

The bottom part 10 may be drawn out a certain amount in the axial direction X-X from the top part 20. The mounting box 400 reaches a maximum length when the bottom part 10 is fully drawn out from the top part 20. The connection space M1 in the interior of the mounting box 400 is at a maximum when the bottom part 10 is fully withdrawn from the top part 20.

The screw towers 25A, 25B of the top part 20 glide into the first slots 15A, 15B of the bottom part 10 when the bottom part 10 is pushed into the top part 20. The guide protrusions 26 at the edges of the screw towers 25A, 25B in the top part 20 glide in the grooves 16 at the axial X-X edges of the first slots 15A, 15B in the bottom part 10. The guide members 17A, 17B in the bottom part 10 glide into the corresponding second slots 27A, 27B in the top part 20.

The second connection sections 14A, 14B of the bottom part 10 comprises first connection means 50 being positioned at both sides of the guide elements 17A, 17B (Figure 1). The top part 20 comprises second opposite connection means 60 being positioned on the second support portions 24A, 24B of the top part 20 (Figure 2). The bottom part 10 and the top part 20 are connected to each other through the first connection means 50 and the second connection means 60 so that an axial X-X length of the mounting box 400 can be varied between a maximum axial X-X length and a minimum axial X-X length by varying the axial X-X position of the second part 20 in relation to the first part 10 or vice a versa.

There may be small radial protrusions 21C extending axially X-X along the outer perimeter of the body portion 21 of the top part 20. The radial protrusions 21C may grip into the edges of the opening into which the mounting box 400 is pushed eliminating rotation of the mounting box 400 in the opening.

There is an opening O1 passing from the first end 21A of the body portion 21 of the top part 20 into the interior of the mounting box 400. The interior of the mounting box 400 forms a space M1. The space M1 in the interior of the mounting box 400 is intended for accommodating cables and/or tubes as well as an electrical component such as a wall socket or a light switch. The wires of cables and/or tubes are connected in the lower portion of the space M1. The electrical component extends only into an upper portion of the space M1. The space M1 may be called a mounting space. The cross section of the opening O1 may have the form of a circle, an oval, a trapeze, a rectangle or any combination of these etc.

The figure shows also fastening means 220, 230 cooperating with the flange means 22 in order to fasten the mounting box 400 to a wall. The fastening means 220, 230 comprises a fastening screw 220 and a fastening member 230. The fastening screw 220 passes through the opening 210 in the first end of the screw tower 25A, 25B to the fastening member 230 located in the lower portion of the screw tower 25A, 25B. When the mounting box 400 has been pushed into the opening in the wall the fastening screw 220 is turned clockwise with a screw driver, whereby the fastening member 230 is turned radially outwardly until the side surface of the fastening member 230 seats against and edge of the screw tower 25A, 25B. The fastening member 230 will then start moving towards the upper edge of the screw tower 25A, 25B when the fastening screw 220 is turned further clockwise. The fastening member 230 will then finally seat against the inner surface of the wall and the flange members 22 will seat against the outer surface of the wall when the mounting box is secured to the wall. The figure shows also the screws 250 for the fastening of the electrical component to be accommodated in the mounting box 400.

The bottom part 10 of the mounting box 400 may comprise three planar surface sections 11A, 11B, 11C and each planar surface section may be provided with two lead-ins. The first planar surface section 11A may be perpendicular to the longitudinal centre axis X-X of the mounting box 400, whereby the first planar surface section 11A may form a bottom of the bottom part 10. The first planar surface section 11A may be provided with two lead-ins 18A, 18B. The second planar surface section 11B may be inclined in view of the longitudinal centre axis X-X of the mounting box 400, whereby the second planar surface section 11B may form a first planar side surface in the bottom part 10. The second planar surface section 11B may also be provided with two lead-ins 18C, 18D. The third planar surface section 11C may also be inclined in view of the longitudinal centre axis X-X of the mounting box 400, whereby the third planar surface section 11C may form a second planar side surface in the bottom part 10. The third planar surface section 11C may also be provided with two lead-ins, which are not seen in the figure. The second planar surface section 11B and the third planar surface section 11C are opposite to each other and may form mirror images to each other.

One of the cable lead-ins 18C in the second planar surface section 11B in the bottom part 10 is provided with a lead-in element 100 protruding outwards from the second planar surface section 11B. The lead-in element 100 may be cut off from the second planar surface section 11B with a knife in order to form a tube lead-in.

The size of the planar surface sections 11A, 11B, 11C may vary. Each planar surface section 11A, 11B, 11C may be formed only just around the edges of the at least one lead-in 18A, 18B, 18C, 18D on the respective planar surface 11A, 11B, 11C. The other possibility is that the planar surface section 11A, 11B, 11C is greater so that it extends a bit beyond the edges of the at least one lead-in 18A, 18B, 18C, 18D as is the embodiment shown in the figure. The figures show an embodiment in which the area of the first planar surface section 11A is bigger than the area of the second 11B and the third 11C planar surface section. The area of the second 11B and the third 11C planar surface section is equal in the figures. The arrangement of the planar surface sections 11A, 11B, 11C shown in the figures makes it possible to maximize the connection space M1 within the mounting box 400. The inclined planar side surface sections 11B, 11C makes it possible to fairly easy mount the tubes or cables to the lead-ins 18C, 18D before the mounting box 400 is pushed into the opening in the wall when the mounting box is mounted to the wall.

Figure 5 shows a cross section of the mounting box.

The cross section shows all three planar surface sections 11A, 11B, 11C in the bottom portion 11 of the bottom part 10 of the mounting box 400. The cross section shows also the first connection means 50 in the bottom part 10 and the second connection means 60 in the top part 20 of the mounting box 400.

The axial length L1 of the mounting box is at the minimum value L1 in this figure.

The first connection means 50 on the bottom part 10 may comprise axially X-X displaced and radially directed grooves 52. The radially directed grooves 52 are positioned adjacent to each other at an axial X-X distance from each other on the second connection sections 14A, 14B on both sides of the guide members 17A, 17B (Figure 1). There is further a first radially outwards directed first notch 51 at an upper axial X-X end of the second connection sections 14A, 14B forming a first stop surface in the first connection means 50. The first notch 51 is positioned on both sides of the guide members 17A, 17B (Figure 1).

The second connection means 60 on the top part 20 comprises a radially inwards directed second notch 61 at a lower axial X-X end of the second support sections 24A, 24B forming a second stop surface in the second connection means 60. The second notch 61 is positioned on both sides of the screw towers 25A, 25B (Figure 2). The second notches 61 cooperate with the first notches 51.

A snap locking is thus achieved between the bottom part 10 and the top part 20 when the second notch 61 at the lower axial X-X end of the second support sections 24A, 24B seats into a respective groove 52 on the first connection means 50 so that the axial X-X length of the mounting box 400 can be varied between a minimum axial X-X length and a maximum axial X-X length by varying the axial X-X position of the bottom part 10 in relation to the top part 20.

The minimum axial length of the mounting box 400 is achieved when the bottom part 10 is pushed fully into the top part 20 i.e. until the upper edge of the guide members 17A, 17B of the bottom part 10 (Figure 1) reaches to upper edge of the second slots 27A, 27B of the top part 20 (Figure 2).

The maximum axial length of the mounting box 400 is achieved at the point when the first notch 51 rests against the second notch 61.

The bottom part 10 may be removed from the top part 20 by applying enough force to drag the parts 10, 20 in the axial direction X-X apart from each other. The first notch 51 must slip over the second notch 61 in order to disengage the bottom part 10 totally from the top part 20. This force is much bigger compared to the force required to move the second notch 61 between the different grooves 52 in the first connection means 50. The axial X-X adjustment of the bottom part 10 in relation to the top part 20 can thus be done stepwise between consecutive grooves 52. The axial X-X adjustment of the bottom part 10 can be done simply by hand force without any additional equipment due to the snap locking.

The figure shows also the cut off line CL along which the lead-in element 100 can be cut off from the bottom part 10 of the mounting box 400. The cut off line CL follows the second planar surface section 11B.

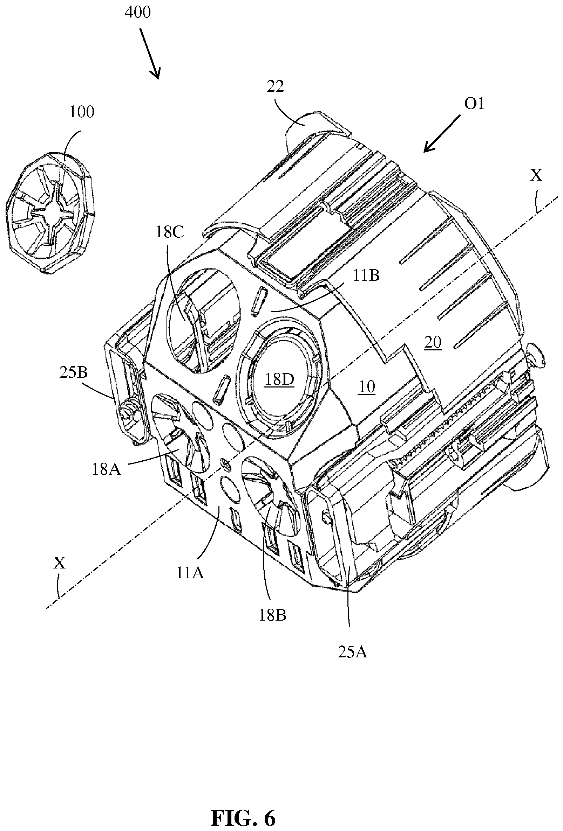

Figure 6 shows the mounting box in a state in which a cable lead-in element has been cut off.

The lead-in element 100 positioned in the first lead in 18C in the second planar surface section 11B in the bottom portion 11 of the bottom part 10 of the mounting box 400 has been cut off. The first lead-in 18C in the second planar surface section 11B forms now a tube lead-in. The cable lead-in element 100 forms an integral part of the bottom part 10 of the mounting box 400. The bottom part 10 of the mounting box 400 may be manufactured by injection moulding in a mould. The cable lead-ins and the tube lad-ins as well as the lead in elements are formed as one entity in a single injection moulding process. The cable lead-in element 100 protrudes outwards from the second planar surface section 11B. This makes it is easy to cut off the cable lead-in element 100 from the second planar surface section 11B in the bottom portion 10 of the mounting box 400.

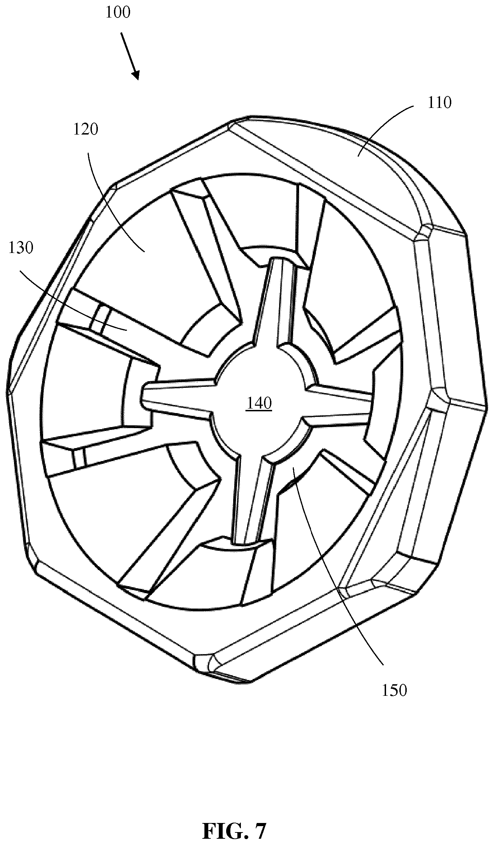

Figure 7 shows an enlargement of the cable lead-in element.

The lead-in element 100 may comprise a flange 110, tongues 120, cuts 130, and a centre portion 140. The flange 110 may have a substantially annular form. The outer perimeter of the flange 110 may be substantially polygonal and the inner perimeter of the flange 110 may be substantially round or oval. There are further tongues 120 extending in the radial direction inwards from the inner perimeter of the flange 110. The tongues 120 may be separated from each other with radially extending cuts 130. The radial length of the tongues 120 may vary so that each other flange 120 is longer and each other flange 120 is shorter. The tongues 120 may be curved inwards so that it is easy to push a cable through the cable lead-in element 100 from the outside of the cable lead-in element 100. It is on the other hand difficult to drag out the cable once it has been pushed through the cable lead-in element 100. The centre portion 140 of the flange 110 may be attached only to the radially shorter tongues 120. The centre portion 140 may be pushed out when the cable is pushed through the cable lead-in element 100. The tongues 120 form the strain relief in the cable lad-in element 100. An opening 150 is formed in the middle of the lead-in element 100 when the centre portion 140 is removed from the lead-in element 100. A smallest perimeter portion of the opening 150 is formed by the radially longer tongues 120 and a bigger perimeter portion is formed by the radially shorter tongues 120.

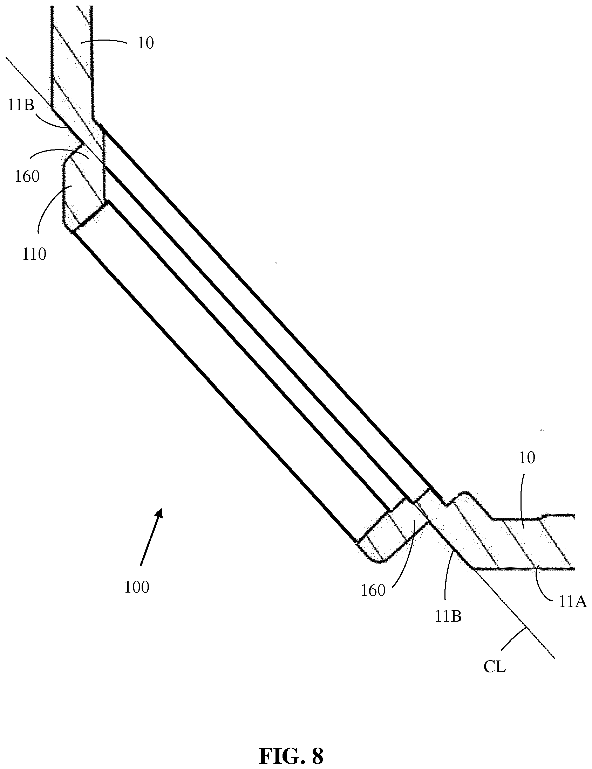

Figure 8 shows a cross section of the cable lead-in element.

The cross section shows that the cable lead-in element 100 may comprise a collar 160 below the flange 110 through which collar 160 the cable lead-in element 100 may become attached to the second planar surface section 11B. The cut off line CL may pass through the bottom of the collar 160. At least a portion of the collar 160 may comprise a weakened wall thickness in the cross section along the second planar surface section 11B in order to facilitate the cutting off of the lead-in element 100.

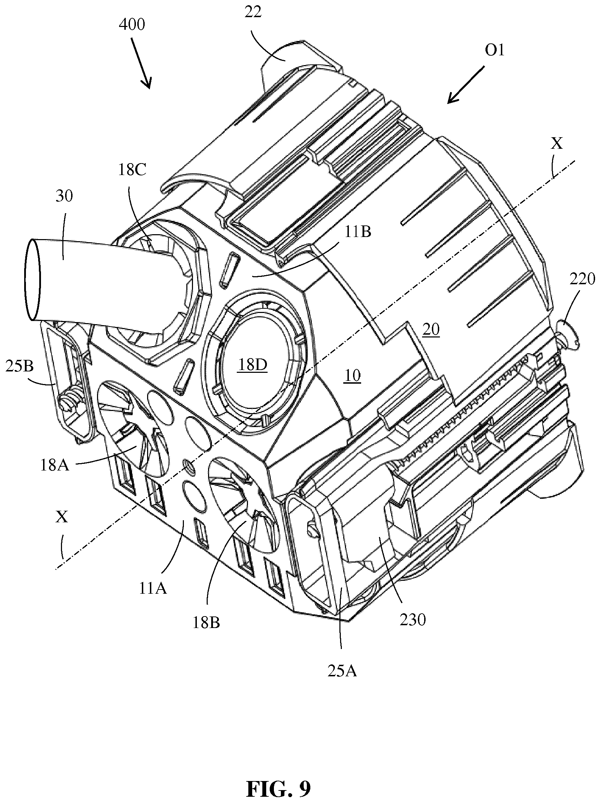

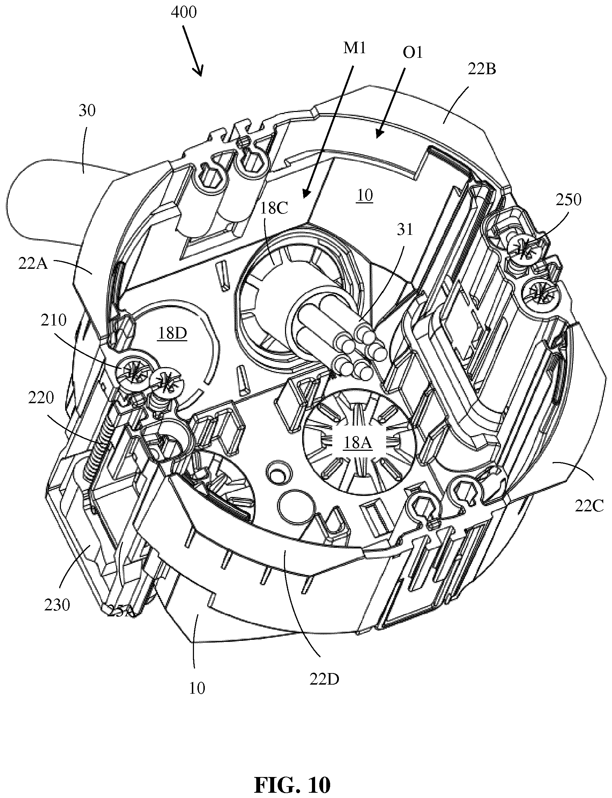

Figure 9 shows a first view of the mounting box with a cable connected to the mounting box and figure 10 shows a second view of the mounting box with a cable connected to the mounting box.

The cable 30 has been pushed through the cable lead-in 18C in the second planar surface section 11B of the bottom 10 of the mounting box 400. The wires 31 of the cable 30 are seen in the second view of the mounting box 400.

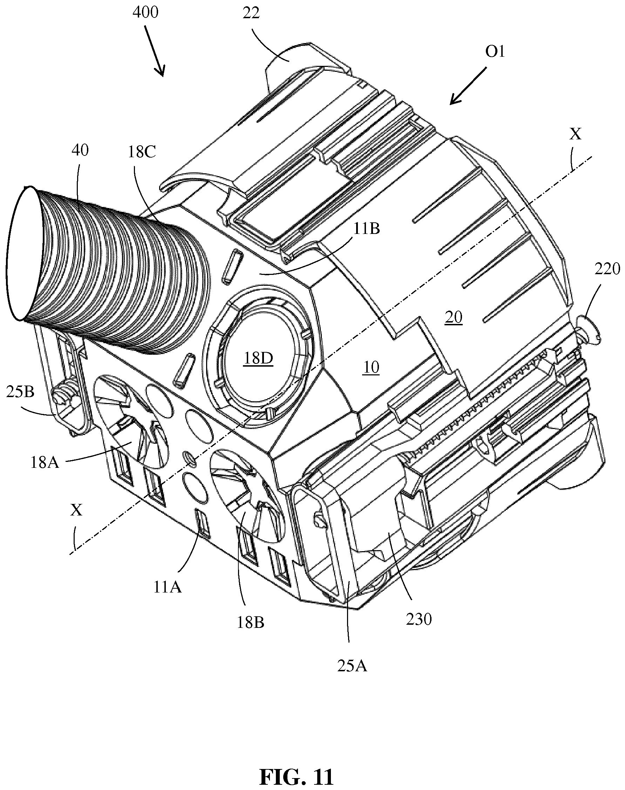

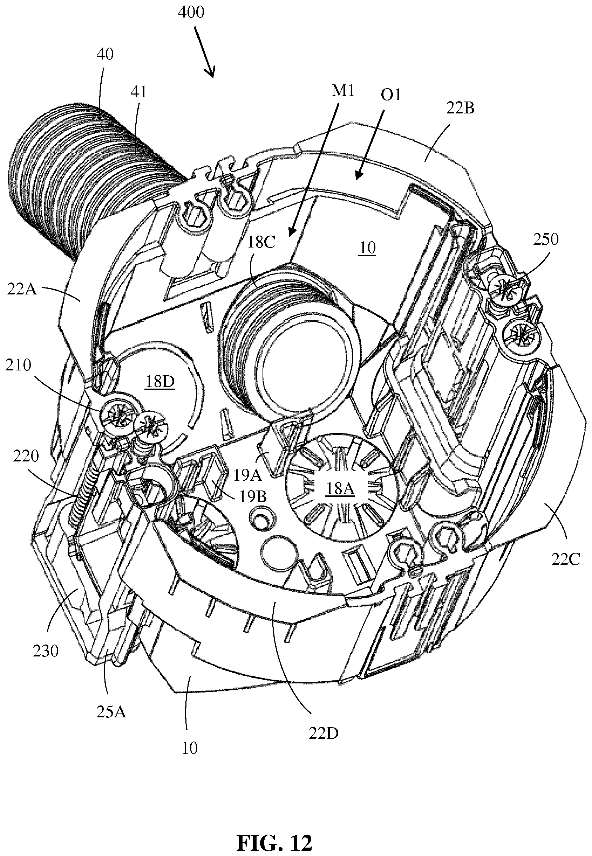

Figure 11 shows a first view of the mounting box with a pipe connected to the mounting box and figure 12 shows a second view of the mounting box with a tube connected to the mounting box.

The tube 40 has been pushed through the lead-in 18C in the second planar section 11B of the bottom 10 of the mounting box 400. The lead-in element 100 has been cut off from the lead-in before the tube 40 is pushed to lead-in 18C. The wires that run within the tube 40 are not shown in the second view of the mounting box 400. The tube 40 is flexible and has a corrugated construction. The tube 40 may be seated in the opening formed in the lead-in 18C when the lead-in element 100 has been removed so that a valley 41 in the corrugation seats against the edge of the opening. The tube 40 is thus secured to the opening in the lead-in 18C.

Figure 12 shows further two stopper elements 19A, 19B positioned within the mounting box 100 and extending substantially vertically upwards from the planar first surface section 11A i.e. the bottom of the mounting box 400. The stopper elements 19A, 19B are positioned so that they form stoppers for the respective tube 40 to be pushed into the mounting box 400 from the tube lead in 18C, 18D. A lower portion of the end of the tube 40 will hit the respective stopper element 19A, 19B when the tube 40 is pushed into the mounting box 400. The stopper elements 19A, 19B will thereby prevent the tube 40 from being pushed too far into the mounting box 400.

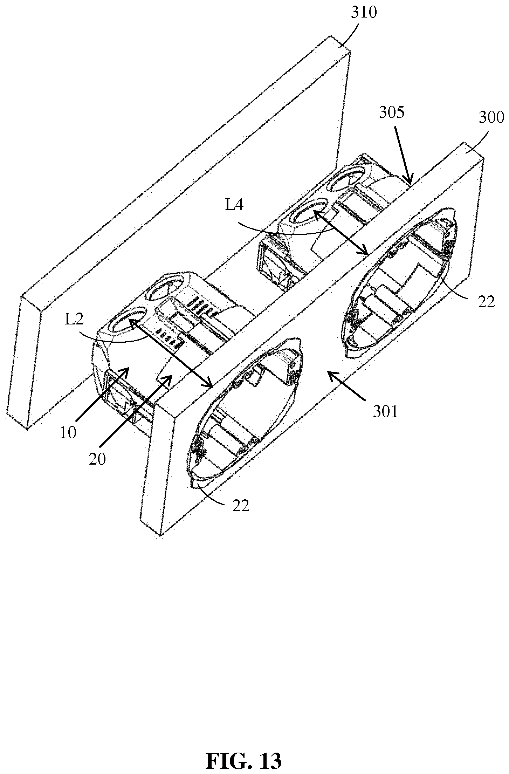

Figure 13 shows two mounting boxes mounted to a wall.

The wall comprises a first wall 300 and a second parallel wall 310 at a distance from the first wall 300. The first wall 300 can be an inner wall 300 of a space e.g. a room, whereby the second wall 310 forms the outer wall 310 of the wall construction. The mounting box 400 is adapted to be installed into an opening 305 in the first wall 300 by pushing the mounting box 400 into the opening 305 of the first wall sheet 300 from a first side 301 of the first wall 300. The first side 301 of the first wall 300 is facing towards the interior of the space delimited by the wall structure. The mounting box 400 to the left in the figure is in a state where the axial X-X length L2 of the mounting box 400 is at a maximum. The mounting box 400 to the right in the figure is in a state where the axial X-X length L1 of the mounting box 400 is at a minimum. The thickness of the wall construction can vary so that the distance between the first wall 300 and the second wall 310 varies or so that the thickness of the first wall 300 varies. There is thus a need to be able to adapt the axial X-X length L1, L2 of the mounting box 400 according to this. The distance L1 from the first side 301 of the first wall 300 to the lead-ins 18A, 18B for the tubes and/or the cables at the bottom of the mounting box 400 is longer in the mounting box 400 situated to the left in the figure. The distance L2 from the first side 301 of the first wall 300 to the lead-ins 18A, 18B for the tubes and/or the cables is shorter in the mounting box 400 situated to the right in the figure. The mounting space within the mounting box 400 to the left in the figure is thus greater compared to the mounting space within the mounting box 400 to the right in the figure. This mounting space within the mounting box 400 can be adjusted at any time after the mounting box 400 has been attached to the wall 300 so that the flange means 22 seat against the first side 401 of the first wall 300.

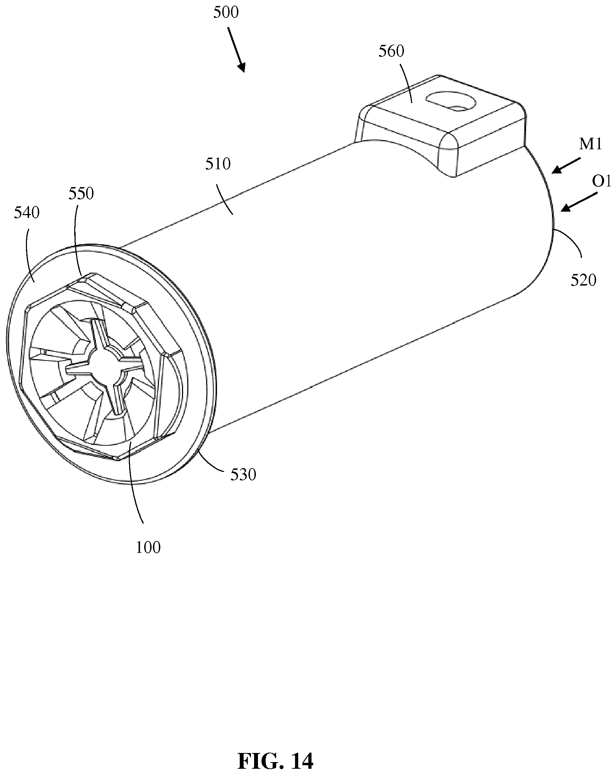

Figure 14 shows a connection sleeve according to the invention.

The connection sleeve 500 forms a connection casing. The connection sleeve 500 comprises a body portion 510, an open O1 top end 520, and a substantially closed bottom 530. A space M1 is formed within the connection sleeve 500. The bottom 530 is provided with a planar surface section 540. The planar surface section 540 in the bottom 530 of the connection sleeve 500 comprises a lead-in 550. The lead in 550 is formed as a combined cable and tube lead-in 550 comprising an outwards from the planar surface section 540 extending lead-in element 100. The lead-in element 100 forms a cable lead-in with strain relief. A tube lead-in may be formed by cutting of the lead-in element 100 along the planar surface section of the connection sleeve 500. There may be a box 560 protruding out from a circumference of the connection sleeve 500 at the open O1 top end 520 of the connection sleeve 500. The box 560 may comprise a locking spring protruding into the connection sleeve 500. A tube may be pushed into the open O1 top end 520 of the connection sleeve 500. The locking spring locks the tube to the connection sleeve 500 when the tube is pushed into the connection sleeve 500.

A cable may be pushed through the lead-in element 100 into the connection sleeve 500 and further through the tube connected to the open O1 tope end 520 of the connection sleeve 500 when the lead-in element 100 is in place. The conductors of the cable may then be connected e.g. in a mounting box into which the tube terminates. The cable will then run partly within a tube and partly without a tube. The cable is held in place by the strain relief in the lead-in element 100.

A second tube may on the other hand be pushed into the tube lead-in in the bottom 530 of the connection sleeve 500 when the lead-in element 100 has been cut off. The connection sleeve 500 will in this case form a connection between two tubes of different size. The second tube connected to the tube lead-in in the bottom 530 of the connection sleeve 500 has a smaller outer perimeter compared to the first tube connected to the tube lead-in in the top end 520 of the connection sleeve 500.

The outer perimeter of the body portion 21 of the top part 20 could also be elliptic or polygonal which means that the bottom part 10 must be elliptic or polygonal in a corresponding way. Also the opening into which the mounting box 400 is to be installed must have a cross section corresponding to the cross section of the mounting box 400. The longitudinal center axis X-X passes through a middle point at the first end 21A of the body portion 21 of the top part 20. The longitudinal center axis X-X is perpendicular to the flange plane defined by the flange members 22.

Connection means 50, 60 e.g. based on adjusting screws that adjust the axial position of the bottom part 10 within the top part 20 could naturally be used instead of the connection means 50, 60 disclosed in the figures.

The bottom part 10 can naturally be provided with lead-ins 18A, 18B in any position in the bottom portion 11 of the bottom part 10. There could be any number of lead-ins 18A, 18B in the bottom portion 11 positioned in any pattern in the bottom portion 11.

The mounting box described in the figures is just one example of a mounting box in which the invention may be used. The invention may be used in any type of mounting box. The invention may be used in a mounting box of the first type or in a mounting box of the second type. The invention may e.g. be used in a mounting box being formed as one entity i.e. the bottom part 10 and the top part 20 are formed as one entity. The space M1 in the interior of such a mounting box is thus constant. The invention may also be used in a mounting box being formed of more than two parts.

The size of the mounting box and the connection sleeve may vary. Also the size of the cable and tube lead-ins may vary. The size of the cable lead-ins in the figures is such that a cable having a diameter of 8 to 13 mm may be used. The size of the tube lead-ins is in the figures such that a tube having a diameter of 20 mm may be used. The mounting box and the connection sleeve may, however, be dimensioned e.g. so that tubes of 16 mm, 20 mm, 25 mm and 30 mm may be used and that cables with a diameter greater than 13 mm may be used.

The mounting box is a wiring accessory that can be used as a distribution box for electrical wires and as a mounting box for an electrical component such as an electric switch, a socket, a TV socket etc.

The connection sleeve is a wiring accessory that can be used as a connection between tubes of different dimensions. The connection sleeve may also be used as a connection in which an electrical cable passes from an open installation into a closed installation i.e. into a tube.

The material of the mounting box and of the connection sleeve may be plastic e.g. polypropylene (PP).

The invention and its embodiments are not limited to the examples described above but may vary within the scope of the claims.

## Claims

1. A connection casing comprising a body (10, 20, 510) with a substantially closed outer perimeter, an open (O1) top end (21A, 520) and a substantially closed bottom (10, 530), a space (M1) being formed within the connection casing (400, 500), the bottom (10) comprising at least one planar surface section (11A, 11B, 11C, 540) having an outer surface and being provided with at least one lead-in (18A, 18B, 18C, 18D, 550), **characterized in that** at least one lead-in (18C, 550) is formed as a combined cable and tube lead-in (18C, 550) comprising
a lead in element (100) extending outwards from the outer surface of the planar surface section (11B, 540) along an axial direction being perpendicular to the outer surface of the planar surface section (11B, 540), the lead-in element (100) being formed as an integral part of the connection casing (400, 500), the lead-in element (100) comprising a collar (160) extending axially outwards from the outer surface of the planar surface section (11B, 540) and a flange (110) extending axially outwards from the collar (160), the lead-in element (100) forming a cable lead-in provided with strain relief (120) positioned within the flange (110),
an opening in the planar surface section (11B, 540) extending through the planar surface section (11B, 540), the opening being enclosed by the lead in element (100), the opening forming a tube lead-in, wherein
the lead-in element (100) is arranged to be cut off from the planar surface section (11B, 540) along a cut-off line (CL) passing through a bottom of the collar (160) by cutting along the outer surface of the planar surface section (11B, 540) in order to remove the lead-in element (100) and thereby expose the tube lead-in.

2. The connection casing according to claim 1, **characterized in that** at least a portion of the collar (160) comprises a weakened wall thickness in the cross section along the planar surface section (11B) in order to facilitate the cutting off of the lead-in element (100).

3. The connection casing according to claims 1 or 2, **characterized in that** the strain relief (120) provided within the flange (110) is formed of flexible tongues (120) extending in a radial direction inwards from the flange (110), adjacent flanges (120) being separated from each other by radially extending cuts (130).

4. The connection casing according to claim 3, **characterized in that** inner ends of the tongues (120) terminate at a distance from each other, whereby an opening (150) is formed in the centre of the lead-in element 100.

5. The connection casing according to claims 4, **characterized in that** the length of the tongues (120) in the radial direction varies.

6. The connection casing according to any one of claims 1 to 5, **characterized in that** the connection casing (400, 500) and the lead-in element (100) is formed in one single production process.

7. The connection casing according to claim 6, **characterized in that** the connection casing (400, 500) and thereby also the lead-in element (100) is formed by injection moulding.

8. The connection casing according to any one of claims 1 to 6, **characterized in that** the connection casing (400, 500) is a mounting box (400).

9. The mounting box according to claim 8, **characterized in that** at least one stopper element (19A, 19B) is provided in the interior of the mounting box (400), the stopper element (19A, 19B) preventing a tube (40) from being pushed too far into the mounting box (400).

10. The mounting box according to claim 8 or 9, **characterized in that** the mounting box (400) comprises further fastening means (220, 230) cooperating with radially outwardly from the top end (21A) extending flange means (22) in order to fasten the mounting box (400) to a wall (300).

11. The mounting box according to claim 10, **characterized in that** the fastening means (220, 230) comprises a fastening member (230) arranged in a bottom portion of the mounting box (400) and a fastening screw (220) extending from a top of the mounting box (400) to the fastening member (230), whereby turning of the fastening screw (220) turns first the fastening member (230) radially outwards from the mounting box (400) and further turning of the fastening screw (220) moves the fastening member (230) upwards so that the fastening member (230) becomes seated against an inner surface of the wall (300), the flange means (22) seating against an outer surface of the wall (300) and the mounting box (400) being attached to the wall (300).

12. The mounting box according to any one of claims 9 to 11, **characterized in that** the mounting box (400) is formed as one entity.

13. The mounting box according to any one of claims 9 to 11, **characterized in that** the mounting box (400) is formed of two or more connectable parts (10, 20).

14. The mounting box according to claims 13, **characterized in that** the mounting box (400) is formed of a bottom part (10) and a top part (20) being movable in relation to each other along a longitudinal centre axis (X-X) of the mounting box (400).

## Patentansprüche

1. Anschlussgehäuse, einen Körper (10, 20, 510) mit einem im Wesentlichen geschlossenen Außenumfang, einem offenen (O1) oberen Ende (21A, 520) und einem im Wesentlichen geschlossenen Boden (10, 530) umfassend, wobei ein Zwischenraum (M1) in dem Anschlussgehäuse (400, 500) ausgebildet ist, wobei der Boden (10) mindestens einen planen Flächenabschnitt (11A, 11B, 11C, 540) umfasst, der eine Außenfläche aufweist und mit mindestens einem Einlass (18A, 18B, 18C, 18D, 550) versehen ist, **dadurch gekennzeichnet, dass** der mindestens eine Einlass (18C, 550) als Kabel-Rohr-Kombinationseinlass (18C, 550) ausgebildet ist, Folgendes umfassend:
ein Einlasselement (100), das sich von der Außenfläche des planen Flächenabschnitts (11B, 540) entlang einer Axialrichtung, die senkrecht zur Außenfläche des planen Flächenabschnitts (11B, 540) verläuft, nach außen erstreckt, wobei das Einlasselement (100) mit dem Anschlussgehäuse (400, 500) einstückig ausgebildet ist, wobei das Einlasselement (100) eine Manschette (160), die sich von der Außenfläche des planen Flächenabschnitts (11B, 540) axial nach außen erstreckt, und einen Flansch (110), der sich von der Manschette (160) axial nach außen erstreckt, umfasst, wobei das Einlasselement (100) einen Kabeleinlass ausbildet, der mit einer im Flansch (110) angeordneten Zugentlastung (120) versehen ist,
eine Öffnung im planen Flächenabschnitt (11B, 540), die sich durch den planen Flächenabschnitt (11B, 540) erstreckt, wobei die Öffnung vom Einlasselement (100) umschlossen ist, wobei die Öffnung einen Rohreinlass ausbildet, wobei
das Einlasselement (100) dazu angeordnet ist, vom planen Flächenabschnitt (11B, 540) entlang einer Trennlinie (CL), die durch einen Boden der Manschette (160) verläuft, abgetrennt zu werden, indem entlang der Außenfläche des planen Flächenabschnitts (11B, 540) geschnitten wird, um das Einlasselement (100) zu entfernen und dadurch den Rohreinlass freizulegen.

2. Anschlussgehäuse nach Anspruch 1, **dadurch gekennzeichnet, dass** zumindest ein Abschnitt der Manschette (160) eine geschwächte Wandstärke im Querschnitt entlang des planen Flächenabschnitts (11B) umfasst, um das Abtrennen des Einlasselements (100) zu ermöglichen.

3. Anschlussgehäuse nach Anspruch 1 oder 2, **dadurch gekennzeichnet, dass** die mit dem Flansch (110) vorgesehene Zugentlastung (120) aus flexiblen Zungen (120) ausgebildet ist, die sich vom Flansch (110) in Radialrichtung nach innen erstrecken, wobei aneinander angrenzende Flansche (120) über sich radial erstreckende Schnitte (130) voneinander getrennt sind.

4. Anschlussgehäuse nach Anspruch 3, **dadurch gekennzeichnet, dass** innere Enden der Zungen (120) voneinander beabstandet enden, wobei eine Öffnung (150) in der Mitte des Einlasselements (100) ausgebildet wird.

5. Anschlussgehäuse nach Anspruch 4, **dadurch gekennzeichnet, dass** die Länge der Zungen (120) in Radialrichtung variiert.

6. Anschlussgehäuse nach einem der Ansprüche 1 bis 5, **dadurch gekennzeichnet, dass** das Anschlussgehäuse (400, 500) und das Einlasselement (100) in einem einzelnen Herstellungsvorgang ausgebildet wird.

7. Anschlussgehäuse nach Anspruch 6, **dadurch gekennzeichnet, dass** das Anschlussgehäuse (400, 500) und dadurch auch das Einlasselement (100) durch Spritzgießen ausgebildet wird.

8. Anschlussgehäuse nach einem der Ansprüche 1 bis 6, **dadurch gekennzeichnet, dass** das Anschlussgehäuse (400, 500) ein Montagekasten (400) ist.

9. Montagekasten nach Anspruch 8, **dadurch gekennzeichnet, dass** mindestens ein Anschlagelement (19A, 19B) im Inneren des Montagekastens (400) vorgesehen ist, wobei das Anschlagelement (19A, 19B) verhindert, dass ein Rohr (40) zu weit in den Montagekasten (400) geschoben wird.

10. Montagekasten nach Anspruch 8 oder 9, **dadurch gekennzeichnet, dass** der Montagekasten (400) eine weitere Befestigungseinrichtung (220, 230) umfasst, die mit sich vom oberen Ende (21A) radial nach außen erstreckenden Flanscheinrichtungen (22) zusammenwirkt, um den Montagekasten (400) an einer Wand (300) zu befestigen.

11. Montagekasten nach Anspruch 10, **dadurch gekennzeichnet, dass** die Befestigungseinrichtung (220, 230) ein Befestigungselement (230), das in einem unteren Abschnitt des Montagekastens (400) angeordnet ist, und eine Befestigungsschraube (220), die sich von der Oberseite des Montagekastens (400) zum Befestigungselement (230) erstreckt, umfasst, wobei das Drehen der Befestigungsschraube (220) zunächst das Befestigungselement (230) vom Montagekasten (400) radial nach außen dreht und das weitere Drehen der Befestigungsschraube (220) das Befestigungselement (230) nach oben bewegt, sodass das Befestigungselement (230) an einer Innenfläche der Wand (300) aufliegt, wobei die Flanscheinrichtungen (22) an einer Außenfläche der Wand (300) aufliegen und der Montagekasten (400) an der Wand (300) befestigt wird.

12. Montagekasten nach einem der Ansprüche 9 bis 11, **dadurch gekennzeichnet, dass** der Montagekasten (400) einstückig ausgebildet ist.

13. Montagekasten nach einem der Ansprüche 9 bis 11, **dadurch gekennzeichnet, dass** der Montagekasten (400) aus zwei oder mehreren verbindbaren Teilen (10, 20) ausgebildet ist.

14. Montagekasten nach Anspruch 13, **dadurch gekennzeichnet, dass** der Montagekasten (400) aus einem unteren Teil (10) und einem oberen Teil (20) ausgebildet ist, die in Bezug zueinander entlang einer in Längsrichtung verlaufenden Mittelachse (X-X) des Montagekastens (400) beweglich sind.

## Revendications

1. Boîtier de connexion comprenant un corps (10, 20, 510) présentant un périmètre externe sensiblement fermé, une extrémité supérieure (21A, 520) ouverte (O1) et un fond sensiblement fermé (10, 530), un espace (M1) étant formé à l'intérieur du boîtier de connexion (400, 500), le fond (10) comprenant au moins une section de surface plane (11A, 11B, 11C, 540) ayant une surface externe et étant munie d'au moins une entrée (18A, 18B, 18C, 18D, 550), **caractérisé en ce qu'**au moins une entrée (18C, 550) est formée sous forme d'entrée combinée de câble et de tube (18C, 550) comprenant
un élément d'entrée (100) s'étendant vers l'extérieur depuis la surface externe de la section de surface plane (11B, 540) le long d'une direction axiale perpendiculaire à la surface externe de la section de surface plane (11B, 540), l'élément d'entrée (100) étant formé en tant que partie intégrée au boîtier de connexion (400, 500), l'élément d'entrée (100) comprenant un collier (160) s'étendant axialement vers l'extérieur depuis la surface externe de la section de surface plane (11B, 540) et une bride (110) s'étendant axialement vers l'extérieur depuis le collier (160), l'élément d'entrée (100) formant une entrée de câble munie d'un détendeur (120) positionné à l'intérieur de la bride (110),
une ouverture dans la section de surface plane (11B, 540) s'étendant à travers la section de surface plane (11B, 540), l'ouverture étant entourée par l'élément d'entrée (100), l'ouverture formant une entrée de tube, dans lequel
l'élément d'entrée (100) est agencé pour être coupé de la section de surface plane (11B, 540) le long d'une ligne de coupe (CL) passant à travers un fond du collier (160) au moyen de la coupe le long de la surface externe de la section de surface plane (11B, 540) afin de retirer l'élément d'entrée (100) et ainsi d'exposer l'entrée de tube.

2. Boîtier de connexion selon la revendication 1, **caractérisé en ce qu'**au moins une partie du collier (160) comprend une épaisseur de paroi affaiblie dans la section transversale le long de la section de surface plane (11B) afin de faciliter la coupe de l'élément d'entrée (100).

3. Boîtier de connexion selon les revendications 1 ou 2, **caractérisé en ce que** le détendeur (120) placé à l'intérieur de la bride (110) est formé de languettes flexibles (120) s'étendant dans une direction radiale vers l'intérieur depuis la bride (110), des brides adjacentes (120) étant séparées les unes des autres par des coupes s'étendant radialement (130).

4. Boîtier de connexion selon la revendication 3, **caractérisé en ce que** des extrémités internes des languettes (120) se terminent à une distance les unes des autres, moyennant quoi une ouverture (150) est formée dans le centre de l'élément d'entrée (100).

5. Boîtier de connexion selon la revendication 4, **caractérisé en ce que** la longueur des languettes (120) varie dans la direction radiale.

6. Boîtier de connexion selon l'une quelconque des revendications 1 à 5, **caractérisé en ce que** le boîtier de connexion (400, 500) et l'élément d'entrée (100) sont formés en un unique processus de production.

7. Boîtier de connexion selon la revendication 6, **caractérisé en ce que** le boîtier de connexion (400, 500) et donc également l'élément d'entrée (100) sont formés par moulage par injection.

8. Boîtier de connexion selon l'une quelconque des revendications 1 à 6, **caractérisé en ce que** le boîtier de connexion (400, 500) est un boîtier de montage (400).

9. Boîtier de connexion selon la revendication 8, **caractérisé en ce qu'**au moins un élément d'arrêt (19A, 19B) est placé dans l'intérieur du boîtier de montage (400), l'élément d'arrêt (19A, 19B) empêchant un tube (40) d'être poussé trop loin dans le boîtier de montage (400) .

10. Boîtier de connexion selon la revendication 8 ou 9, **caractérisé en ce que** le boîtier de montage (400) comprend en outre des moyens de fixation (220, 230) coopérant avec des moyens de bride (22) s'étendant radialement vers l'extérieur depuis l'extrémité supérieure (21A) afin de fixer le boîtier de montage (400) à une paroi (300).

11. Boîtier de connexion selon la revendication 10, **caractérisé en ce que** les moyens de fixation (220, 230) comprennent un élément de fixation (230) disposé dans une partie inférieure du boîtier de montage (400) et une vis de fixation (220) s'étendant depuis un sommet du boîtier de montage (400) vers l'élément de fixation (230), moyennant quoi la rotation de la vis de fixation (220) fait tourner tout d'abord l'élément de fixation (230) radialement vers l'extérieur du boîtier de montage (400) et la rotation supplémentaire de la vis de fixation (220) déplace l'élément de fixation (230) vers le haut de sorte que l'élément de fixation (230) s'assied contre une surface interne de la paroi (300), les moyens de bride (22) étant assis contre une surface externe de la paroi (300) et le boîtier de montage (400) étant fixé à la paroi (300).

12. Boîtier de connexion selon l'une quelconque des revendications 9 à 11, **caractérisé en ce que** le boîtier de montage (400) est formé en tant qu'une seule entité.

13. Boîtier de connexion selon l'une quelconque des revendications 9 à 11, **caractérisé en ce que** le boîtier de montage (400) est formé de deux parties ou plus pouvant être reliées (10, 20).

14. Boîtier de connexion selon la revendication 13, **caractérisé en ce que** le boîtier de montage (400) est formé d'une partie inférieure (10) et d'une partie supérieure (20) pouvant bouger l'une par rapport à l'autre le long d'un axe central longitudinal (X-X) du boîtier de montage (400).
